# EUROPEAN PATENT APPLICATION

(11) **EP 1 982 913 A1**
(43) Date of publication of application: **22.10.2008**
(21) Application number: 07713647.1
(22) Date of filing: 19.01.2007
(51) Int. Cl.: B62M 11/16, F16H 3/08, F16H 9/24

(54) **TRANSMISSION FOR BICYCLE**

(30) Priority: 10.02.2006 JP 2006034117
(71) Applicant: Fujiwara Wheel Incorporated, Izumi-shi, Osaka 594-0032 (JP)
(72) Inventor: FUJIWARA, Hisao, Izumi-shi, Osaka 594-0032 (JP)
(74) Representative: Grünecker, Kinkeldey, Stockmair & Schwanhäusser Anwaltssozietät
(86) International application number: PCT/JP2007/050760
(87) International publication number: WO 2007/091414

(57) **Abstract**

A covered bicycle transmission is proposed which is simple in structure and can be mounted on various types of existing bicycles.

The bicycle transmission includes a rotary member 1 fitted around a main shaft 51, as many main gears 2, 3, 4 and 5 as the number of reduction steps which are arranged in a row around the rotary member 1, a plurality of counter gears 7, 8, 9 and 10 rotationally fixed to a countershaft 6 extending parallel to the main shaft 51, the counter gears being linked to the respective main gears and rotated at predetermined speeds corresponding to the respective main gears, ratchet pawls 15, 16, 17 and 18 carried on the rotary member 1 so as to correspond to the respective main gears, the main gears having ratchet teeth 19 on their inner peripheries with which the respective ratchet pawls are configured to be brought into meshing engagement, and a switch member 20 for selectively protruding and retracting the respective ratchet pawls from and into an outer periphery of the rotary member 1, wherein by operating the switch member, the ratchet pawls 15, 16, 17 and 18 are individually and selectively brought into and out of engagement with the corresponding ratchet teeth 19, whereby driving force is selectively transmitted through one of the main gears 2, 3, 4 and 5 and one of the counter gears 7, 8, 9 and 10 corresponding to the one of the main gears, thereby changing the rotational speed ratio between input and output members.

## Description

### TECHNICAL FIELD

This invention relates to a covered bicycle transmission for transmitting driving force at different reduction ratios by changing gears.

### BACKGROUND ART

In order to adjust the pedal force according to the gradient of the road surface on which the bicycle is traveling, sports bicycles are ordinarily equipped with an exposed transmission comprising multiple steps of sprockets and a chain which is selectively engageable with one of the sprockets. But most ordinary town bicycles are equipped with a covered transmission comprising a planetary gear mechanism, which allows easier and smoother speed change.

Patent document 1 discloses such a covered bicycle transmission, which includes gear case mounted in a frame, a driven rotary member rotatable relative to a crankshaft which rotates under the pedal force, a sprocket fixed to one side thereof, a carrier rotationally fixed to the crankshaft, a plurality of steps of planetary gears mounted on shafts fixed to the carrier, and rotatable sun gears provided inside of and meshing with the respective steps of planetary gears. One step of the planetary gears mesh with an internal gear of the driven rotary member which is provided radially outwardly of the one step of the planetary gears. A ratchet mechanism is provided between the carrier and the driven rotary member to absorb the rotational speed difference therebetween. By operating a one-way clutch for selectively permitting and prohibiting the rotation of the respective sun gears, the internal gear, whose speed is increased relative to the crankshaft, is switched over, thereby changing the speed.

Patent document 2 discloses a transmission including a gear case fixed to a frame, and a driven rotary member rotatable relative to a crankshaft which is rotated under the pedal force. A sprocket and a large-diameter sun gear are integrally formed on one and the other side of the driven rotary member. Large-diameter planetary gears and small-diameter planetary gears are supported on shafts fixed to a carrier which is rotationally fixed relative to the crankshaft. A small-diameter sun gear rotatable relative to the crankshaft is provided radially inwardly of and meshes with the large-diameter planetary gears. The large-diameter sun gear is located radially inwardly of and meshes with the small-diameter planetary gears. Internal gears are provided radially outwardly of and mesh with the large-diameter and small-diameter planetary gears, respectively. A ratchet mechanism is provided between the small-diameter sun gear and the driven rotary member to absorb the rotational speed difference therebetween. By operating a one-way clutch for selectively permitting and prohibiting the rotation of the respective internal gears relative to the gear case, the sun gears, whose speed is increased relative to the crankshaft, are switched over, thereby changing the speed.

Patent document 1: JP Patent Publication 6-203081A
Patent document 2: JP Patent Publication 6-298153A

### DISCLOSURE OF THE INVENTION

### OBJECT OF THE INVENTION

These transmissions require large number of parts including the ratchet mechanism, the sun gears, the internal gear, and the corresponding one-way clutch, so that they are complicated in structure. Also, because such transmissions are so large in diameter and width, they cannot be mounted on existing bicycles using general-purpose parts.

An object of the present invention is to provide a covered bicycle transmission which is simple in structure and can be mounted on various types of existing bicycles.

### MEANS TO ACHIEVE THE OBJECT

In order to achieve this object, the present invention provides a bicycle transmission comprising a rotary member fitted around a main shaft, as many main gears as the number of reduction steps which are arranged in a row around the rotary member, a plurality of counter gears rotationally fixed to a countershaft extending parallel to the main shaft, the counter gears being linked to the respective main gears and rotated at predetermined speeds corresponding to the respective main gears, ratchet pawls carried on the rotary member so as to correspond to the respective main gears, the main gears having ratchet teeth on their inner peripheries with which the respective ratchet pawls are configured to be brought into meshing engagement, and a switch member for selectively protruding and retracting the respective ratchet pawls from and into an outer periphery of the rotary member, wherein by operating the switch member, the ratchet pawls are individually and selectively brought into and out of engagement with the corresponding ratchet teeth, whereby driving force is selectively transmitted through one of the main gears and one of the counter gears corresponding to the one of the main gears, thereby changing the rotational speed ratio between input and output members.

In one arrangement, the switch member is provided radially inwardly of the rotary member and has a plurality of recesses formed in the outer periphery thereof so as to be circumferentially displaced from each other, wherein when the switch member is rotated relative to the rotary member, the ratchet pawls slide along the outer periphery of the switch member and selectively and individually protrude from and retract into the rotary member.

The bicycle transmission may further comprise a nonrotatable stationary member, and an operating member that rotates by pulling and pushing an operating wire. In this arrangement, differential gears are mounted on shafts provided on the stationary member and the operating member, respectively, the differential gears meshing with external teeth formed on the switch member and the rotary member, respectively, and meshing with internal teeth formed on a ring member provided therearound, whereby the rotational speed ratio is changed by the relative rotation between the switch member and the rotary member.

The main shaft may be a crankshaft that rotates under the pedal force. In this arrangement, the transmission is configured to transmit the rotation of the crankshaft as an input member to a front sprocket as an output member.

The main shaft may be an axle supporting a bicycle rear wheel. In this arrangement, the transmission is configured to transmit the rotation of a rear sprocket as an input member to an outer case as an output member.

### ADVANTAGES OF THE INVENTION

In the bicycle transmission according to this invention, as many main gears as the number of reduction steps are associated with the corresponding counter gears at predetermined speed ratios. By operating the switch member, the ratchet pawls are selectively brought into and out of engagement with the corresponding ratchet teeth, thereby switching the main gear through which driving force is transmitted to the corresponding counter gear. With this arrangement, it is not necessary to provide a plurality of steps of planetary gears, sun gears and internal gears, and switch over the power transmission path. Thus, the bicycle transmission according to the invention is simple in structure, can be manufactured at a low cost, and is reliable in use. Also, the bicycle transmission according to this invention is compact in size, and can be easily mounted on existing bicycles using general-purpose parts. Even if this transmission has many steps, it is possible to change the speed ratio smoothly and comfortably.

### BRIEF DESCRIPTION OF THE DRAWINGS

Fig. 1 is an axial sectional view of a transmission according to a first embodiment of the present invention, showing the fourth-speed mode.
Fig. 2 is a right-hand sectional view of Fig. 1.
Fig. 3 is a left-hand sectional view of a switch mechanism of the transmission of Fig. 1.
Fig. 4 is a right-hand sectional view of the switch mechanism of Fig. 3.
Fig. 5 is an axial sectional view of the transmission of Fig. 1, showing the third-speed mode.
Fig. 6 is an axial sectional view of the transmission of Fig. 1, showing the second-speed mode.
Fig. 7 is an axial sectional view of the transmission of Fig. 1, showing the first-speed mode.
Fig. 8 is an axial sectional view of a transmission according to a second embodiment of the present invention, showing the fourth-speed mode.
Fig. 9 is a right-hand sectional view of Fig. 8.
Fig. 10 is a left-hand sectional view of a switch mechanism of the transmission of Fig. 8.
Fig. 11 is a right-hand sectional view of the switch mechanism of Fig. 10.
Fig. 12 is an axial sectional view of the transmission of Fig. 8, showing the third-speed mode.
Fig. 13 is an axial sectional view of the transmission of Fig. 8, showing the second-speed mode.
Fig. 14 is an axial sectional view of the transmission of Fig. 8, showing the first-speed mode.

- 1.: Rotary member
- 2,: 3, 4, 5. Main gear
- 6.: Countershaft
- 7,: 8, 9, 10. Counter gear
- 11.: Gear case
- 12.: Clamp bolt
- 13.: Bearing
- 14.: Sprocket (front)
- 15, 16, 17, 18.: Ratchet pawl
- 19.: Ratchet teeth
- 20.: Switch member
- 21.: Recess
- 22.: Operating member
- 23.: Switch shaft
- 24.: Switch gear
- 25.: Wire
- 26.: Coil spring
- 27.: Differential gear
- 28.: Ring member
- 29.: Partition plate
- 30.: Support nut
- 31.: Intermediate support ring
- 32.: Switch ring
- 33, 34.: Bearing seat
- 35.: Bearing
- 36.: Bearing seat
- 37.: Bearing
- 38, 39.: Nut
- 40.: Mounting plate
- 51.: Crankshaft
- 52.: Crank arm
- 53.: Crank case
- 54.: Crank boss
- 55.: Bearing
- 56.: Chain case
- 57.: Support plate
- 58.: Anti-rotation member
- 59.: Chain
- 61.: Axle
- 62.: Sprocket (rear)
- 63.: Outer case
- 64.: Flange
- 65.: Support member

### BEST MODE FOR EMBODYING THE INVENTION

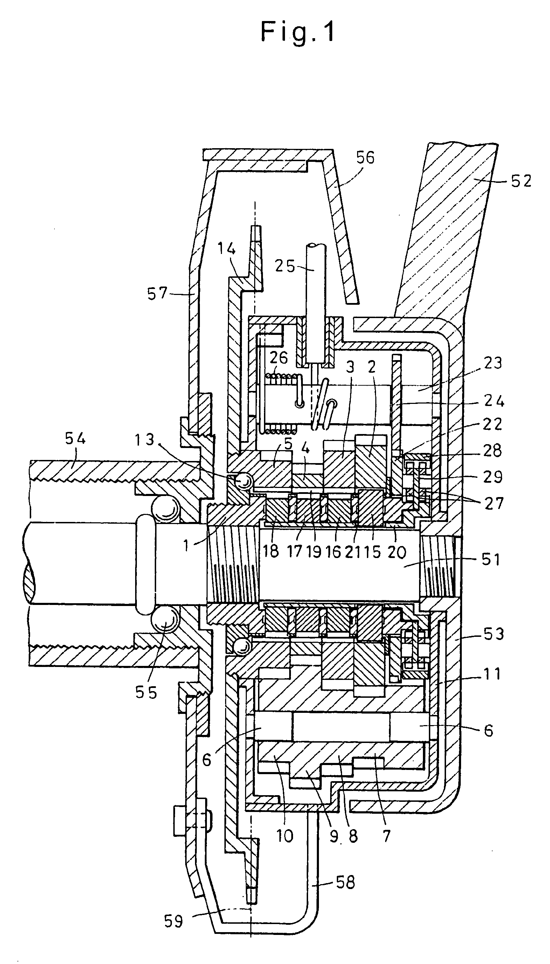

The first embodiment is described with reference to Figs. 1 to 4, which is a 4-step covered transmission mounted on the crankshaft of a bicycle.

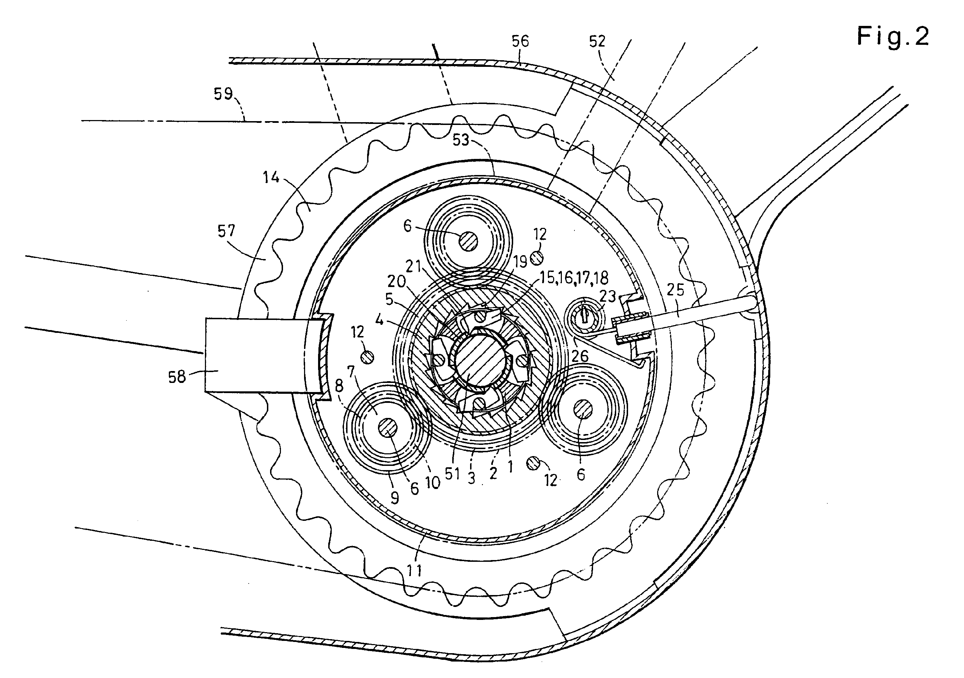

As shown in Figs. 1 and 2, this transmission is fitted on the crankshaft 51 and fixed in position by fitting a boss of a crankcase 53 integral with a crank arm 52. The crankshaft 51 is supported by a crank boss 54 of the bicycle frame through a bearing 55 and is rotated under the stepping force applied to pedals at the free ends of the crank arms 52.

A rotary member 1 is in threaded engagement with the outer periphery of the crankshaft 51 so as to be rotationally fixed to the crankshaft 51. Around the rotary member 1, four main gears, i.e. fourth-speed gear 2, third-speed gear 3, first-speed gear 4 and second-speed gear 5 are arranged from right to left in Fig. 1 so as to be rotatable relative to each other.

Around the crankshaft 51, three countershafts 6 are provided at angular intervals of 120°, parallel to the crankshaft 51. Each countershaft carries four counter gears 7 to 9. The counter gears 7 to 9 have their bosses secured to each countershaft 6 so that each counter gear is rotated at a predetermined speed ratio by the corresponding one of the main gears 2 to 5 by meshing with it.

The main gears 2 to 5 and the counter gears 7 to 10 are received in a cylindrical gear case 11. The countershafts 6 have their ends supported by the gear case 11. The gear case 11 comprises right and left halves that are joined together by clamp bolts 12, and is rotationally fixed to a support plate 57 of a chain case 56 by means of an anti-rotation member 58.

The main gear 5 is rotatably supported by the rotary member 1 through a bearing 13. A sprocket 14 is mounted on the left-hand portion of the main gear 5, which protrudes from the gear case 11. A chain 59 for driving the rear bicycle wheel is trained around the sprocket 14. The gear case 11 has a sufficiently small outer diameter so as to be received in the sprocket 14.

The rotary member 1 carries ratchet pawls 15 to 18 that correspond to the respective main gears 2 to 5. Each ratchet pawl is biased such that its distal end protrudes radially outwardly and engages one of ratchet teeth 19 formed on the inner periphery of each of the main gears 2 to 5.

A cylindrical switch member 20 is inserted in the rotary member 1 so as to be rotatable relative to the crankshaft 51 and the rotary member 1. The switch member 20 has in its outer periphery a plurality of groups of recesses 21 (which are actually through holes) such that each group of through holes radially oppose one of the main gears 2 to 5 and circumferentially displaced from the other groups of through holes. The ratchet pawls 15 to 18 have their proximal ends in sliding contact with the outer periphery of the switch member 20.

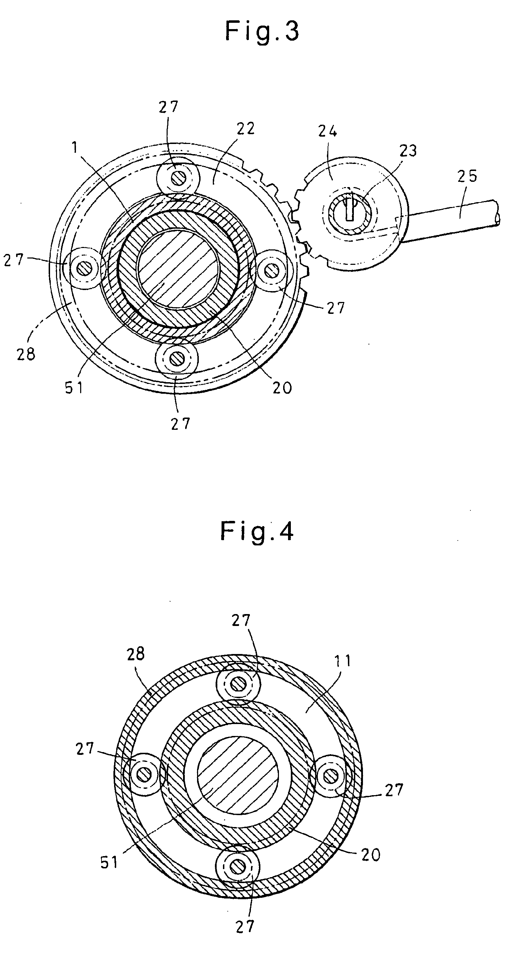

As shown in Figs. 1 and 3, at the right-hand end of the rotary member 1, an operating member 22 having external teeth on the outer periphery thereof within its 120° range is rotatably mounted around the rotary member 1. A switch gear 24 is rotationally fixedly mounted on a switch shaft 23 rotatably supported by the gear case 11 so as to mesh with the external teeth of the operating member 22.

The core of a wire 25 extending from an operating lever mounted on the handlebar of the bicycle and a coil spring 26 are wound around and coupled to the switch shaft 23. When the operating lever is operated to pull the core of the wire 25, the switch gear 24 is rotated in one direction. When the lever is released, the switch gear 24 is rotated in the other direction under the biasing force of the coil spring 26.

Four differential gears 27 are rotatably supported on shafts fixed to the operating member 22 and circumferentially spaced from each other at intervals of 90°. The differential gears 27 mesh with external teeth formed on the rotary member 1 and internal teeth formed on a ring member 28 provided therearound.

As shown in Figs. 1 and 4, other four differential gears 27 are rotatably supported on shafts fixed to the right-hand half of the stationary gear case 11 and circumferentially spaced from each other at intervals of 90°. These other four differential gears 27 mesh with external teeth formed on the switch member 20 and the internal teeth of the ring member 28.

The differential gears 27 carried on the operating member 22 and the differential gears 27 carried on the gear case 11 are kept out of contact with each other by a ring-shaped partition plate 29 disposed therebetween.

In this transmission, when e.g. the fourth-speed (highest-speed) gear is selected (Fig. 1), the proximal ends of the ratchet pawls 15 are engaged in the corresponding recesses 21 of the switch member 20, so that their distal ends engage the internal teeth 19 of the main gear 2. The other ratchet pawls 16, 17 and 18 are kept out of engagement with the internal teeth 19 of the respective main gears 3, 4 and 5.

Thus, the rotation of the crankshaft 51 as the input member is transmitted through the rotary member 1 to the main gear 2, which has the largest diameter. Thus, the counter gear 7 is rotated at the speed corresponding to the peripheral speed of the main gear 2. The rotation of the counter gear 7 is then transmitted through the counter gear 10, which is rotationally fixed to the gear 7, and the main gear 5 to the sprocket 14 as the output member. Thus, the bicycle rear wheel is rotated at the highest speed.

Simultaneously, the rotation of the rotary member 1 is transmitted to the ring member 28 through the differential gears 27 of the operating member 22, and from the ring member 28 to the switch member 20 through the differential gears 27 of the gear case 11. Thus, the switch member 20 rotates in unison with the rotary member 1.

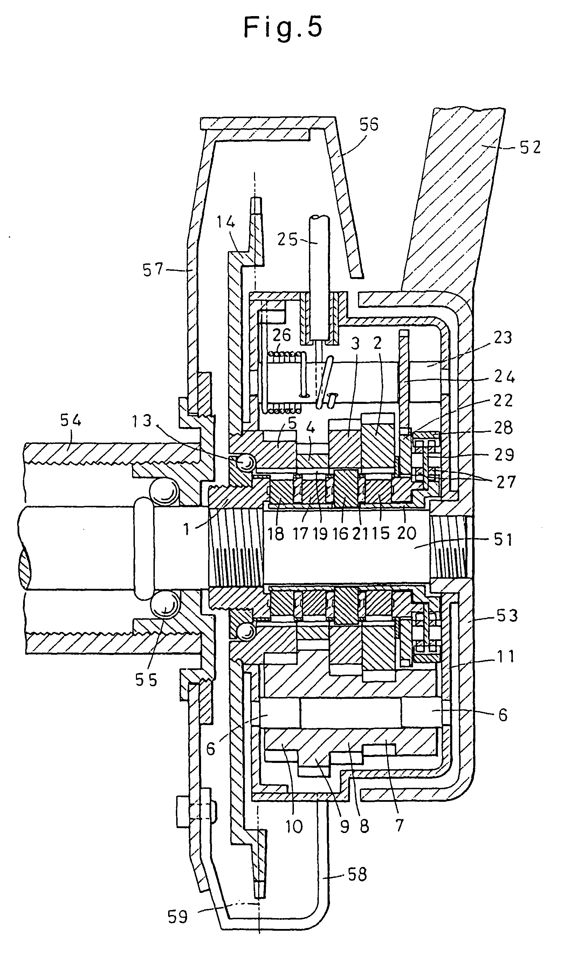

When the core of the wire 25 is pulled to shift to the third-speed gear in this state, as shown in Fig. 5, the operating member 22 rotates by one step together with the switch gear 24, so that its shafts supporting the respective differential gears 27 move circumferentially around the crankshaft 51. This causes the ring member 28 to rotate relative to the rotary member 1, which in turn causes the switch member 20 to rotate relative to the rotary member 1.

As a result, the proximal ends of the ratchet pawls 16 are engaged in the corresponding recesses 21 of the switch member 20, so that their distal ends engage the internal teeth 19 of the main gear 3. On the other hand, the ratchet pawls 15 retract into the rotary member 1. Thus, the ratchet pawls 15, 17 and 18 are kept out of engagement with the internal teeth 19 of the respective main gears 2, 4 and 5.

Thus, the rotation of the crankshaft 51 is transmitted through the rotary member 1 to the main gear 3, which has a diameter one size smaller than the main gear 2. Thus, the counter gear 8 is rotated at the speed corresponding to the peripheral speed of the main gear 3. The rotation of the counter gear 8 is then transmitted through the counter gear 10, which is rotationally fixed to the gear 8, and the main gear 5 to the sprocket 14. Thus, the bicycle rear wheel is rotated at the one-step lower speed.

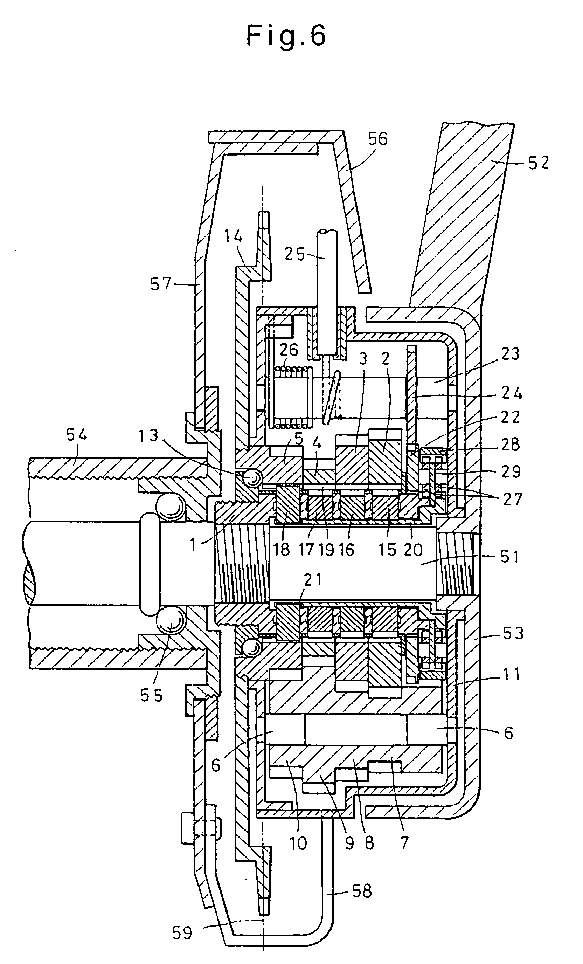

When the core of the wire 25 is pulled to shift to the second-speed gear in this state, as shown in Fig. 6, the operating member 22 rotates by two steps, so that the switch member 20 rotates relative to the rotary member 1 in the same manner as described above, until the ratchet pawls 18 protrude from the rotary member 1 and engage the internal teeth 19 of the main gear 5. In this state, the ratchet pawls 15, 16 and 17 are kept out of engagement with the internal teeth 19 of the respective main gears 2, 3 and 4, so that the bicycle rear wheel is rotated at the two-step lower speed through the sprocket 14, which is rotationally fixed to the main gear 5.

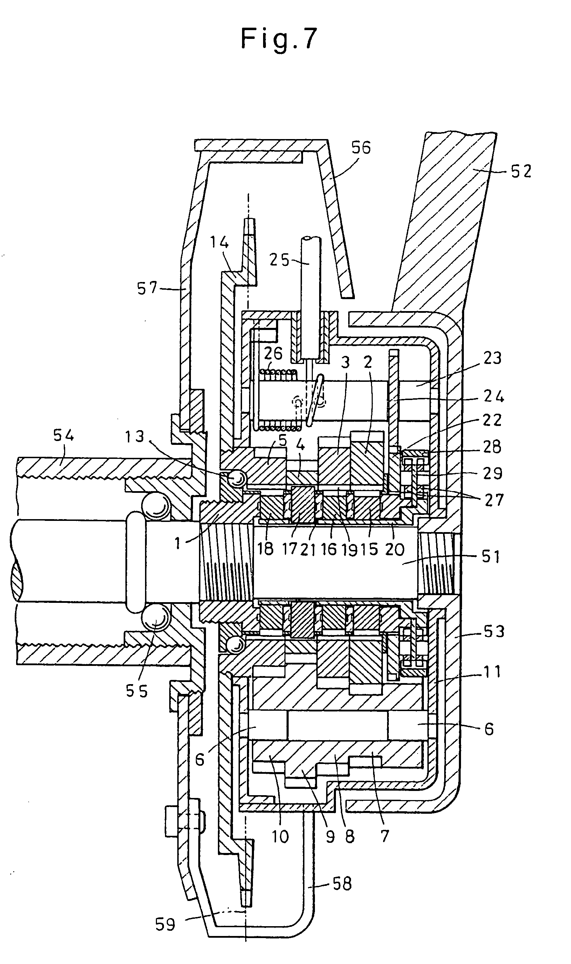

When the core of the wire 25 is pulled to shift to the first-speed gear in this state, as shown in Fig. 7, the operating member 22 rotates by three steps, so that the switch member 20 rotates relative to the rotary member 1 in the same manner as described above, until the ratchet pawls 17 protrude from the rotary member 1 and engage the internal teeth 19 of the main gear 4, which has the smallest diameter. In this state, the ratchet pawls 15, 16 and 18 are kept out of engagement with the internal teeth 19 of the respective main gears 2, 3 and 5. The rotation of the main gear 4 is transmitted through the counter gear 10, which is rotationally fixed to the counter gear 9, and the main gear 5 to the sprocket 14. Thus, the bicycle rear wheel is rotated at the three-step lower speed (i.e. lowest speed).

When upshifted in this state, the switch shaft 23 and the switch gear 24 are rotated in the opposite direction under the biasing force of the coil spring 26, thus rotating the operating member 22 and thus the switch member 20 in the direction opposite to the downshifting direction, thus selectively protruding and retracting the respective ratchet pawls 15 to 18 from and into the rotary member 1.

Since the speed reduction ratio is determined by the numbers of the teeth of gears on two shafts, even if this transmission is a four-speed or more than four-speed transmission, it is more compact in size than planetary gear type transmissions, and still, it can be smoothly upshifted and downshifted according to various travel conditions without giving uncomfortable feeling to the rider.

In any drive position of the transmission, only those of the ratchet pawls 15 to 18 that are transmitting driving force mesh with the corresponding ratchet teeth 19, with the other ratchet pawls kept out of engagement with the corresponding ratchet teeth 19. This minimizes noise from the ratchet mechanism, thus increasing comfortableness of the rider.

This transmission can be mounted on an existing bicycle with no transmission. Because the switch mechanism of this transmission has a short axial length, with this transmission mounted on an existing bicycle, the crank arm coupled to the transmission never protrudes outwardly to such an extent as to make pedaling difficult. Also, since the weight of the transmission acts on the central portion of the bicycle, the rider can lift and move the bicycle in a balanced manner.

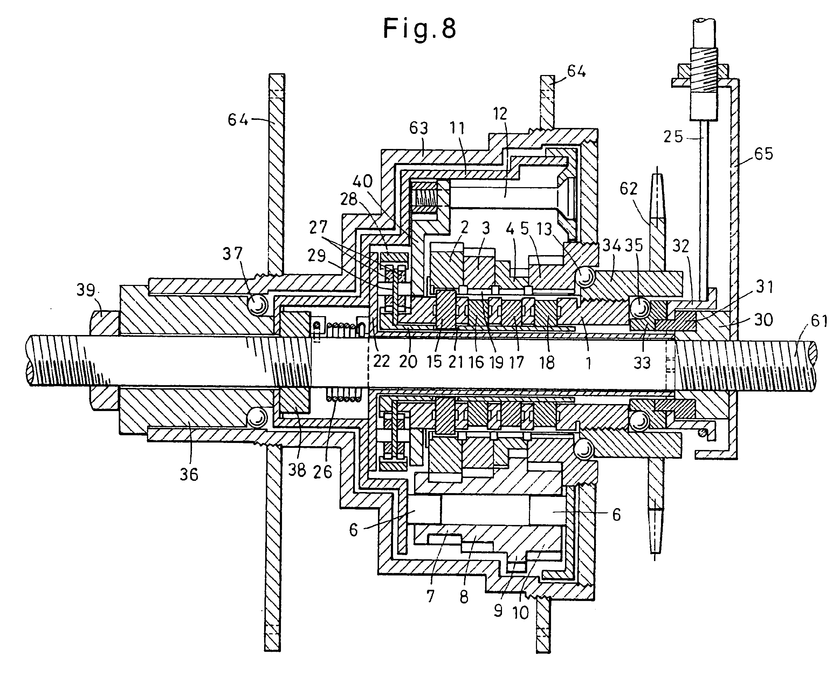

Figs. 8 to 14 show the second embodiment of the present invention, which is a 4-step covered transmission mounted on the rear wheel of a bicycle. Elements functionally similar or identical to those of the first embodiment are denoted by identical numerals, and their description is omitted.

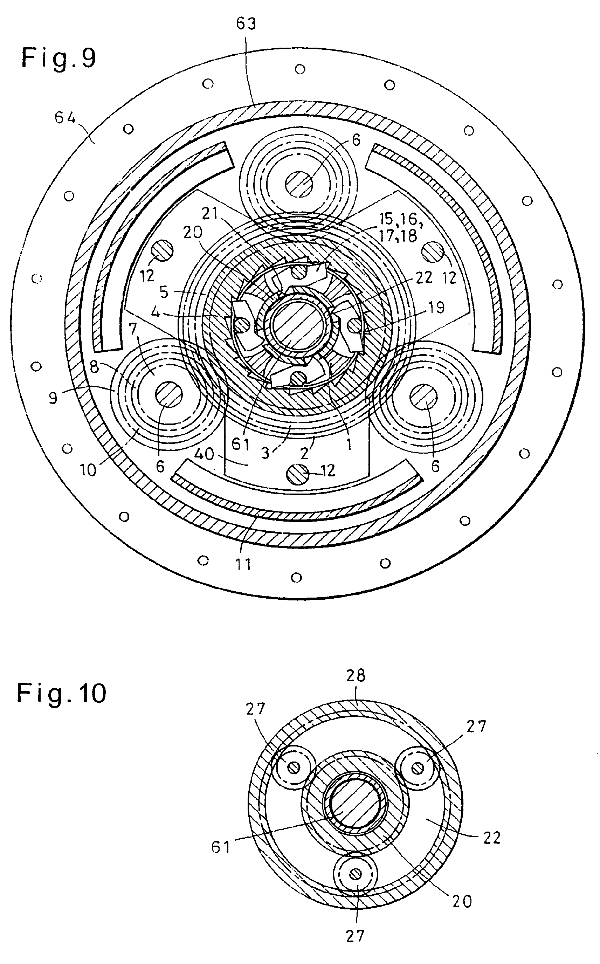

As shown in Figs. 8 and 9, the axle 61 of the rear wheel serves as a main shaft of the transmission, and the rotation is transmitted from a rear sprocket 62 as an input member to an outer case 63 as an output member. Two flanges 64 are mounted around the outer case 63 so as to be spaced apart from each other. Each flange 64 is formed with engaging holes at circumferentially equal intervals in which spokes of the rear wheel are engaged.

This transmission includes a support nut 30 threaded onto the axle 61 from its right-hand end, an intermediate support ring 31 fitted on the support nut 30, a switch ring 32 rotatably fitted around the intermediate support ring 31, and a bearing seat 33 also fitted on the intermediate support ring 31. A core of a wire 25 supported by a support member 65 is wound around and coupled to the switch ring 32. By operating the transmission through the wire 25, the switch ring 32 is rotated in either direction.

A rotary member 1 is mounted around the axle 61 with a play. At its right-hand end, the rotary member 1 is rotatably supported on the axle through a bearing 35 between a bearing seat 34 threaded onto the right-hand end of the rotary member 1 and the bearing seat 33.

At its right-hand end, the outer case 63 is rotationally fixed to the main gear 5 thorough a lid member. At its left-hand end, the outer case 63 is rotatably supported on a bearing seat 36 fitted on the axle 61 through a bearing 37. The bearing seat 36 and the gear case 11 are fixed to the axle 61 by means of nuts 38 and 39 threaded onto the axle 61 from its left-hand end.

The operating member 22 includes a tubular portion rotatably inserted between the axle 61 and the switch member 20 and having its right-hand end in engagement with the switch ring 32. The switch ring 32 is thus rotationally fixed to the operating member 22. The coil spring 26 biasing the operating member 22 in the upshifting direction is coupled to the left-hand end of the operating member 22 and the nut 38.

At its left-hand end, the operating member 22 has a disk portion carrying three shafts circumferentially spaced from each other at intervals of 120° and each rotatably supporting a differential gear 27. The differential gears 27 mesh with external teeth formed on the switch member 20 and internal teeth formed on a ring member 28 provided therearound.

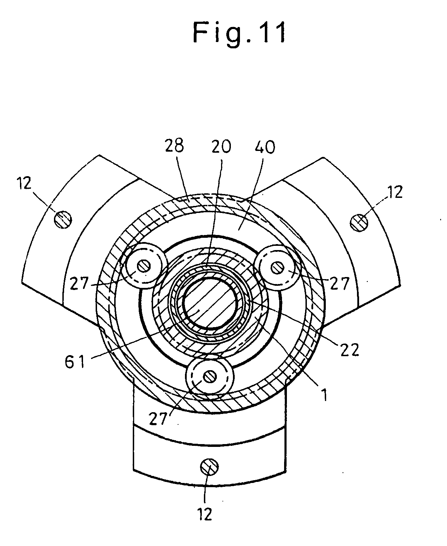

As shown in Figs. 8 and 11, other three differential gears 27 are rotatably supported on shafts fixed to a stationary mounting plate 40 mounted in the gear case 11 at its left-hand portion and circumferentially spaced from each other at intervals of 120°. These other three differential gears 27 mesh with external teeth formed on the rotary member 1 and the internal teeth of the ring member 28.

In this transmission, when e.g. the fourth-speed (highest-speed) gear is selected (see Fig. 8), the rotation of the sprocket 62 as the input member is transmitted through the rotary member 1 to the main gear 2, which has the largest diameter. Thus, the counter gear 7 is rotated at the speed corresponding to the peripheral speed of the main gear 2. The rotation of the counter gear 7 is then transmitted through the counter gear 10, which is rotationally fixed to the gear 7, and the main gear 5 to the outer case 63 as the output member. Thus, the bicycle rear wheel, which is mounted on the flanges 64, is rotated at the highest speed.

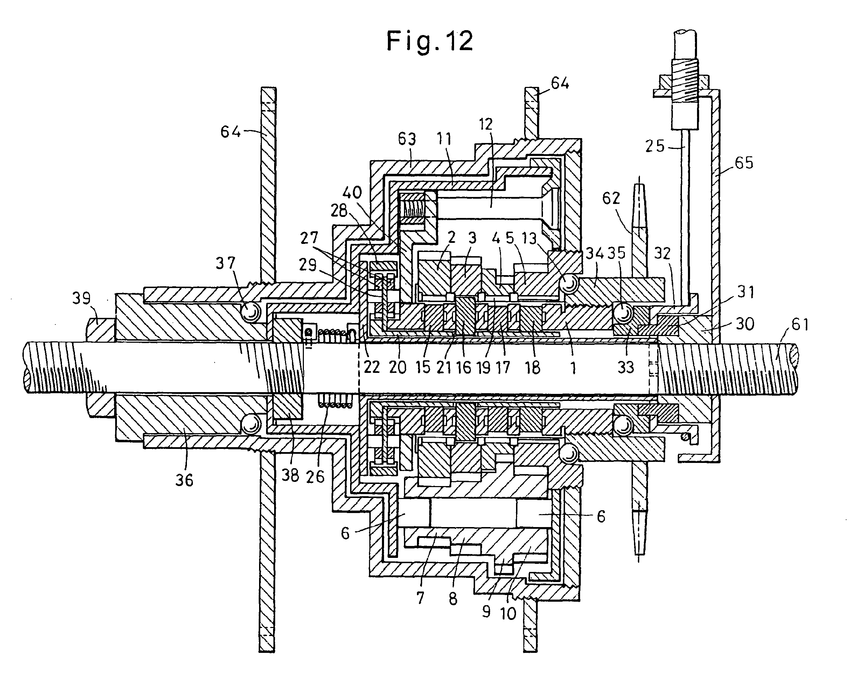

When the core of the wire 25 is pulled to shift to the third-speed gear in this state, as shown in Fig. 12, the operating member 22 rotates by one step together with the switch ring 32, so that its shafts supporting the respective differential gears 27 move circumferentially around the axle 61. This causes the ring member 28 to rotate relative to the rotary member 1, which in turn causes the switch member 20 to rotate relative to the rotary member 1.

As a result, the proximal ends of the ratchet pawls 16 are engaged in the corresponding recesses 21 of the switch member 20, so that their distal ends engage the internal teeth 19 of the main gear 3. On the other hand, the ratchet pawls 15 retract into the rotary member 1. Thus, the ratchet pawls 15, 17 and 18 are kept out of engagement with the internal teeth 19 of the respective main gears 2, 4 and 5.

Thus, the rotation of the sprocket 62 is transmitted through the rotary member 1 to the main gear 3, which has a diameter one size smaller than the main gear 2. Thus, the counter gear 8 is rotated at the speed corresponding to the peripheral speed of the main gear 3. The rotation of the counter gear 8 is then transmitted through the counter gear 10, which is rotationally fixed to the gear 8, and the main gear 5 to the outer case 63. Thus, the bicycle rear wheel is rotated at the one-step lower speed.

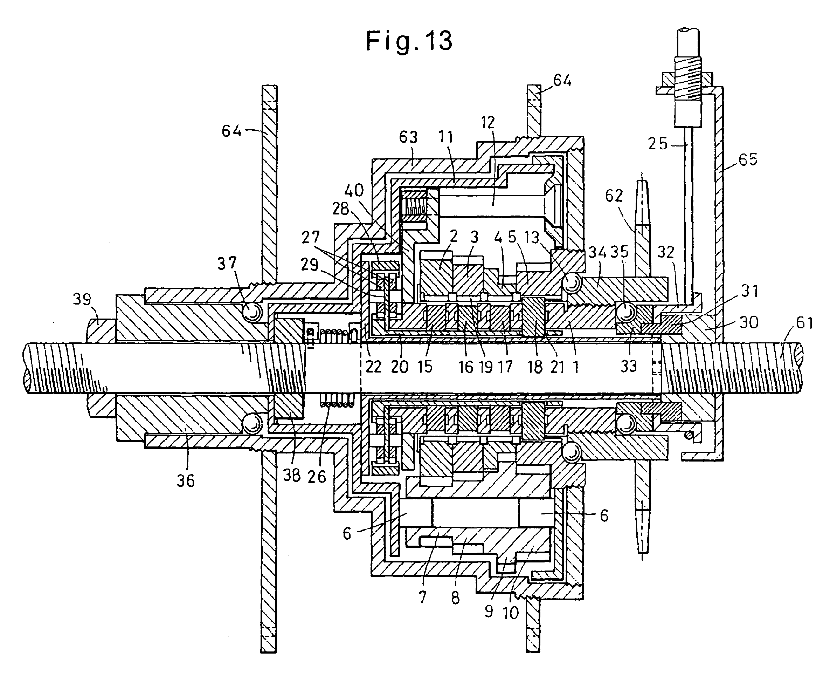

When the core of the wire 25 is pulled to shift to the second-speed gear in this state, as shown in Fig. 13, the operating member 22 rotates by two steps, so that the switch member 20 rotates relative to the rotary member 1 in the same manner as described above, until the ratchet pawls 18 protrude from the rotary member 1 and engage the internal teeth 19 of the main gear 5. In this state, the ratchet pawls 15, 16 and 17 are kept out of engagement with the internal teeth 19 of the respective main gears 2, 3 and 4, so that the bicycle rear wheel is rotated at the two-step lower speed through the outer case 63, which is rotationally fixed to the main gear 5.

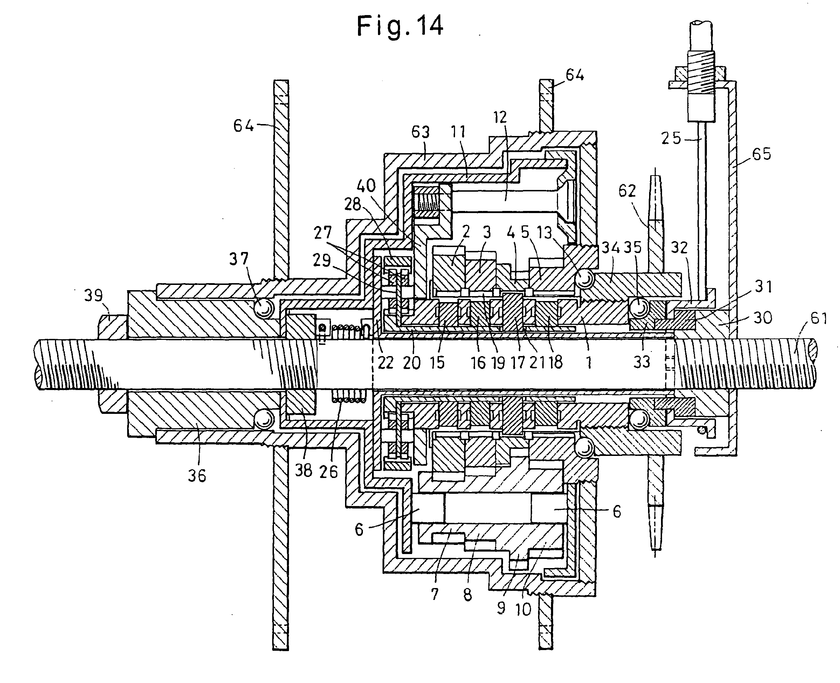

When the core of the wire 25 is pulled to shift to the first-speed gear in this state, as shown in Fig. 14, the operating member 22 rotates by three steps, so that the switch member 20 rotates relative to the rotary member 1 in the same manner as described above, until the ratchet pawls 17 protrude from the rotary member 1 and engage the internal teeth 19 of the main gear 4, which has the smallest diameter. In this state, the ratchet pawls 15, 16 and 18 are kept out of engagement with the internal teeth 19 of the respective main gears 2, 3 and 5. The rotation of the main gear 4 is transmitted through the counter gear 10, which is rotationally fixed to the counter gear 9, and the main gear 5 to the outer case 63. Thus, the bicycle rear wheel is rotated at the three-step lower speed (i.e. lowest speed).

When upshifted in this state, the operating member 22 is rotated in the opposite direction under the biasing force of the coil spring 26, thereby rotating the switch member 20 in the direction opposite to the downshifting direction, thus selectively protruding and retracting the respective ratchet pawls 15 to 18 from and into the rotary member 1.

With this arrangement, even if this transmission is a four-speed or more than four-speed transmission, its circumferential and axial dimensions are substantially the same as those of existing 3-step covered transmissions. Thus, when this transmission is mounted on any newly manufactured bicycle, it is not necessary to change the design of the mounting portion of the rear wheel, so that it is possible to use general-purpose parts for such a mounting portion, thereby reducing the cost. Still, it can be smoothly upshifted and downshifted according to various travel conditions without giving uncomfortable feeling to the rider.

## Claims

1. A bicycle transmission comprising a rotary member (1) fitted around a main shaft (51, 61), as many main gears (2, 3, 4 and 5) as the number of reduction steps which are arranged in a row around said rotary member (1), a plurality of counter gears (7, 8, 9 and 10) rotationally fixed to a countershaft (6) extending parallel to said main shaft (51, 61), said counter gears being linked to the respective main gears (2, 3, 4 and 5) and rotated at predetermined speeds corresponding to the respective main gears, ratchet pawls (15, 16, 17 and 18) carried on said rotary member (1) so as to correspond to the respective main gears (2, 3, 4 and 5), said main gears (2, 3, 4 and 5) having ratchet teeth (19) on their inner peripheries with which said respective ratchet pawls (15, 16, 17 and 18) are configured to be brought into meshing engagement, and a switch member (20) for selectively protruding and retracting the respective ratchet pawls (15, 16, 17 and 18) from and into an outer periphery of said rotary member (1), wherein by operating said switch member, the ratchet pawls (15, 16, 17 and 18) are individually and selectively brought into and out of engagement with the corresponding ratchet teeth (19), whereby driving force is selectively transmitted through one of said main gears (2, 3, 4 and 5) and one of said counter gears (7, 8, 9 and 10) corresponding to said one of said main gears, thereby changing the rotational speed ratio between input and output members.

2. The bicycle transmission of claim 1 wherein said switch member (2) is provided radially inwardly of said rotary member (1) and has a plurality of recesses (21) formed in the outer periphery thereof so as to be circumferentially displaced from each other, wherein when said switch member (20) is rotated relative to said rotary member (1), said ratchet pawls (15, 16, 17 and 18) slide along the outer periphery of said switch member (20) and selectively and individually protrude from and retract into said rotary member (1).

3. The bicycle transmission of claim 2 further comprising a nonrotatable stationary member (11, 44), and an operating member (22) that rotates by pulling and pushing an operating wire (25), wherein differential gears (27) are mounted on shafts provided on said stationary member and said operating member, respectively, said differential gears (27) meshing with external teeth formed on said switch member (20) and said rotary member (1), respectively, and meshing with internal teeth (19) formed on a ring member (28) provided therearound, whereby the rotational speed ratio is changed by the relative rotation between said switch member (20) and said rotary member (1).

4. The bicycle transmission of any of claims 1 to 3 wherein said main shaft is a crankshaft (51) that rotates under the pedal force, and wherein the transmission is configured to transmit the rotation of said crankshaft (51) as an input member to a front sprocket (14) as an output member.

5. The bicycle transmission of any of claims 1 to 3 wherein said main shaft is an axle (61) supporting a bicycle rear wheel, and wherein the transmission is configured to transmit the rotation of a rear sprocket (62) as an input member to an outer case (63) as an output member.
